# EUROPÄISCHE PATENTANMELDUNG

(11) **EP 3 511 371 A1**
(43) Veröffentlichungstag der Anmeldung: **17.07.2019**
(21) Anmeldenummer: 18151660.0
(22) Anmeldetag: 15.01.2018
(51) Int. Cl.: C08J 11/06, C08B 16/00, D01F 1/02, D01F 2/00, D01F 2/06, D01F 13/02

(54) **WIEDERVERWENDUNG VON NICHTLÖSLICHEN PARTIKELN AUS EINEM CELLULOSE AUFWEISENDEN AUSGANGSSTOFF**

(71) Anmelder: LENZING AKTIENGESELLSCHAFT, 4860 Lenzing (AT)
(72) Erfinder: Herchl, Richard, 4910 Ried im Innkreis (AT); Weilach, Christian, 4840 Vöcklabruck (AT); Klaus-Nietrost, Christoph, 4840 Vöcklabruck (AT)
(74) Vertreter: Dilg, Haeusler, Schindelmann Patentanwaltsgesellschaft mbH

(57) **Zusammenfassung**

Verfahren zum Herstellen eines regenerierten cellulosischen Formkörpers (102), wobei das Verfahren aufweist: i) Zuführen eines Ausgangsstoffs (110), welcher Cellulose und nichtlösliche Partikel, insbesondere nichtlöslich in Lösungsmitteln die in Lyocell-Verfahren und/oder Viskose-Verfahren verwendet werden, aufweist, wobei der Ausgangsstoff (110) ein Festkörper ist, in welchem die nichtlöslichen Partikel verteilt vorliegen, und ii) Erzeugen des regenerierten cellulosischen Formkörpers (102) basierend auf dem Ausgangsstoff (110) derart, dass der regenerierte cellulosische Formkörper (102) zumindest einen Teil der nichtlöslichen Partikel enthält.

## Beschreibung

Die Erfindung betrifft ein Verfahren zum Herstellen eines regenerierten cellulosischen Formkörpers, den regenerierten cellulosischen Formkörper und eine Spinnlösung.

Die Erfindung bezieht sich auf das technische Gebiet des Wiederverwendens (Recycling), insbesondere des Wiederverwendens von Ausgangsstoffen, welche Cellulose aufweisen. Weiter insbesondere betrifft die Erfindung ein Wiederverwenden von diesen Ausgangsstoffen zum Herstellen eines Formkörpers, welcher ebenfalls Cellulose enthält, insbesondere wobei die Cellulose des Formkörpers im Wesentlichen in Form von Lyocellfasern und/oder Viskosefasern vorliegt.

Als Viskosefasern werden Chemiefasern bzw. Regeneratfasern bezeichnet, die mittels eines Viskoseverfahren genannten Nassspinnverfahrens hergestellt werden. Der Ausgangsrohstoff des Viskoseverfahrens ist Cellulose, die auf der Basis von Holz bereitgestellt wird. Aus diesem Ausgangsrohstoff Holz wird die hochreine Cellulose in Form von Chemiezellstoff gewonnen. In aufeinanderfolgenden Prozessstufen wird der Zellstoff zuerst mit Natronlauge behandelt, wodurch sich Alkalicellulose bildet. Bei einer anschließenden Umsetzung dieser Alkalicellulose mit Schwefelkohlenstoff bildet sich Cellulose-Xanthogenat. Daraus wird durch weitere Zugabe von Natronlauge die Viskose-Spinnlösung erzeugt, die durch Löcher brausenartiger Spinndüsen in ein Spinnbad gepumpt wird. Dort entsteht durch Koagulation pro Spinndüsenloch ein Viskose-Filament. Die so hergestellten Viskose-Filamente werden im Anschluss zu Viskose-Stapelfasern geschnitten.

Lyocell bezeichnet eine Cellulose aufweisende Regeneratfasergattung, die nach einem Direkt-Lösemittelverfahren hergestellt wird. Die Cellulose wird für das Lyocell-Verfahren aus dem Rohstoff Holz extrahiert. Der so gewonnene Zellstoff kann anschließend in N-Methylmorpholin-N-oxid (NMMO), einem Lösungsmittel, durch Wasserentzug ohne chemische Modifizierung gelöst, filtriert und anschließend durch Spinndüsen gepresst werden. Die so geformten Filamente werden nach Passieren eines Luftspaltes in einem Bad mit wässriger NMMO-Lösung ausgefällt, und anschließend zu Stapelfasern geschnitten.

Unmodifizierte Cellulosefasern wie Lyocell oder Viskose können ein seidenglänzendes Erscheinungsbild aufweisen. Dieser Effekt ist oftmals im Textilbereich im Allgemeinen, und im Nonwowen (Vlies)-Bereich im Speziellen, nicht akzeptabel. Nichtlösliche Partikel, insbesondere Metalloxide wie Titandioxid, Zinkoxid und Siliziumoxid, aber auch andere Pigmente wie Bariumsulfat, werden auf Grund ihrer vorteilhaften Eigenschaften bezüglich Lichtbrechung/Beugung daher in der Faserindustrie als Mattierungsmittel eingesetzt.

Nun enthalten einige Ausgangsstoffe wie Alttextilien (welche bereits von einem Verbraucher benutzt/getragen wurden, Post-Consumer Textil) oder Reste aus einer Kleidungsherstellung (Textilverschnitte, Pre-Consumer Textil) in der Regel eine Mehrzahl von Polymerfasern, beispielsweise Baumwolle und Polyester, und damit auch geringe Mengen von nichtlöslichen Partikeln. Die Partikel stammen hierbei meist aus dem synthetischen Faserbereich (z.B. Titandioxidpartikel als Weißpigmente in Polyester) und nicht aus der Baumwolle. Baumwolle, obwohl aus sehr reiner Cellulose, ist durch eine innere Struktur (Hohlfaser) inhärent matt. Dies trifft jedoch nicht auf Lyocellfasern und Viskosefasern zu, welche ebenfalls aus Cellulose bestehen, jedoch zusätzlich mattiert werden müssen.

Beim Recycling von Ausgangsstoffen wie Altkleidern und/oder Resten aus der Kleidungsherstellung wird üblicherweise versucht, möglichst reine Fasern oder Polymere zurückzugewinnen. So werden in allen bekannten Fällen aus dem Stand der Technik zusätzliche Stoffe wie beispielsweise Pigmente, Füllstoffe oder mineralische Bestandteile im Zuge der Recyclingschritte eliminiert und letztendlich als Filterschlamm entsorgt. Zusammengefasst sieht der Stand der Technik keinerlei Funktionalisierung von Resten wie z.B. nichtlöslichen Partikeln bei einem Recycling vor.

Im Gegenteil, bei der Verwendung von recycelten Materialien als Rohstoffe für die Cellulose-Herstellung stellt sich bisher immer das Problem der Reinheit dieser Ausgangstoffe (Rezyklate). Diese sind häufig mit nicht holztypischen Materialien verunreinigt. Insbesondere sind z.B. heutige Alttextilien und/oder Textilverschnitte stark mit nichtlöslichen Partikeln, beispielsweise Titandioxid, belastet. Entsprechend werden diese Stoffe abgereichert. Die entsprechenden Abreicherungen sind hierbei kostenaufwändig und ressourcenintensiv. Es existieren zurzeit keine spezifischen Prozesse zur Nutzung der Rest-Bestandteile von nichtlöslichen Partikeln, insbesondere Metalloxiden, bei einem Recycling. Insbesondere keine solchen, die geeignet wären, ein entsprechendes Recycling in großtechnischem Maßstab zu betreiben.

Auf der anderen Seite, wie oben bereits beschrieben, werden in Lyocell- und/oder Viskosefasern nichtlösliche Partikel wie Metalloxide, insbesondere Titandioxid, zusätzlich beigefügt. Dies führt zunächst natürlich zu höheren Aufwendungen zur Beschaffung der zusätzlichen Partikel. Die Feinverteilung der Partikel ist weiterhin jedoch aufwändig und schwierig, insbesondere weil viele Metalloxide kaum löslich bzw. schwer dispergierbar sind und zu Verklumpung bzw. Aggregation neigen.

Es ist eine Aufgabe der vorliegenden Erfindung, in ressourcensparender, nachhaltiger und zugleich effizienter Weise nichtlösliche Partikel bei einem Wiederverwenden in einem regenerierten cellulosischen Formkörper bereitzustellen.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Aspekt der vorliegenden Erfindung ist ein Verfahren zum Herstellen eines regenerierten cellulosischen Formkörpers bereitgestellt, wobei das Verfahren aufweist: i) Zuführen eines Ausgangsstoffs, der Cellulose und nichtlösliche Partikel aufweist, und ii) Erzeugen des regenerierten cellulosischen Formkörpers basierend auf dem Ausgangsstoff derart, dass der regenerierte cellulosische Formkörper zumindest einen Teil der nichtlöslichen Partikel enthält. Hierbei ist der Ausgangsstoff ein Festkörper, wobei die nichtlöslichen Partikel in dem Ausgangsstoff verteilt vorliegen. Insbesondere sind die nichtlöslichen Partikel nichtlöslich in Lösungsmitteln die in Lyocell-Verfahren, insbesondere das Lösungsmittel N-Methylmorpholin-N-oxid (NMMO), und/oder Viskose-Verfahren verwendet werden.

Gemäß einem anderen Aspekt der vorliegenden Erfindung wird ein regenerierter cellulosischer Formkörper bereitgestellt, welcher nach dem oben beschriebenen Verfahren hergestellt werden kann. Der regenerierte cellulosische Formkörper ist hierbei ausgewählt aus der Gruppe, welche besteht aus einem Filament, Fasern, einer Folie, einem Gewebe, einem Vlies, einer Mikrokugel, Beads und einem Schwamm. Weiterhin weist der regenerierte cellulosische Formkörper einen Anteil von nichtlöslichen Partikel, insbesondere Titandioxid, in dem Bereich von 0,05 % bis 3 %, insbesondere 0,25 % bis 1,5 % auf. Ferner weist der Formkörper zumindest eines der unten beschriebenen Merkmale auf.

Der Anteil der nichtlöslichen Partikel in dem regenerierten cellulosischen Formkörper weist mehr als 30 %, insbesondere mehr als 50 %, der nichtlöslichen Partikel des Ausgangsstoffs auf.

Das Arbeitsvermögen im konditionierten Zustand beträgt zumindest 450 cN%/tex, wenn der Formkörper, insbesondere als Faser, mittels eines Lyocell-Verfahrens hergestellt ist.
Das Arbeitsvermögen beträgt zumindest 400 cN%/tex, wenn der Formkörper, insbesondere als Faser, mittels eines Viskoseverfahrens hergestellt ist.
Im Rahmen dieser Anmeldung kann unter einem "Arbeitsvermögen" das Produkt aus dem Faserfestigkeitswert (in cN/tex, also Centinewton/tex) und dem Faserdehnungswerts (in Prozent) verstanden werden.

Gemäß einem weiteren Aspekt der vorliegenden Erfindung ist eine Spinnlösung bereitgestellt zum Verwenden in einem Lyocell-Verfahren und/oder einem Viskose-Verfahren. Die Spinnlösung weist zumindest ein Lösungsmittel, insbesondere N-Methylmorpholin-N-oxid (NMMO), auf sowie eine Mehrzahl von Polymerfasern, insbesondere Cellulosefasern, welche in dem Lösungsmittel zumindest teilweise gelöst sind. Weiterhin weist die Spinnlösung nicht-lösliche Partikel, insbesondere Titandioxid, auf, welche homogen verteilt in der Spinnlösung vorliegen. Insbesondere weist die Spinnlösung mehr als 0,01 Gewichtsprozent, weiter insbesondere mehr als 0,1 Gewichtsprozent, von den nichtlöslichen Partikel auf, bezogen auf ein Gesamtgewicht der Spinnlösung.

Im Rahmen dieser Anmeldung kann unter dem Begriff "Cellulose" insbesondere eine organische Verbindung verstanden werden, die Bestandteil pflanzlicher Zellwände ist oder synthetisch hergestellt werden kann. Cellulose ist ein Polysaccharid (d.h. ein Vielfachzucker). Cellulose ist unverzweigt und weist typischerweise mehrere hundert bis zehntausende β-D-Glucose-Moleküle (β-1,4-glycosidische Bindung) bzw. Cellobiose-Einheiten auf. Aus Cellulosemolekülen werden von Pflanzen kontrolliert Cellulosefasern aufgebaut. Mit einem technischen Prozess können Cellulosemoleküle unter Bildung von Regeneratfasern zusammengelagert werden, zum Beispiel als reißfeste Fasern.

Im Rahmen dieser Anmeldung kann unter dem Begriff "Formkörper" insbesondere ein zwei- oder dreidimensionaler geometrischer Körper verstanden werden, der ein Resultat eines Verfahrens zum Herstellen bzw. Wiedergewinnen von Cellulose ist. Insbesondere kann unter einem Formkörper ein zwei- oder dreidimensionales Objekt verstanden werden, das Cellulose aufweist oder daraus besteht und aus gelöstem Zellstoff hergestellt wird. Formkörper können insbesondere Lyocell-Formkörper, Viskose-Formkörper oder Modal-Formkörper sein. Typische Formkörper sind Filamente, Fasern, Schwämme und/oder Filme. Grundsätzlich eignen sich alle Arten von Celluloseformkörpern für Ausführungsbeispiele der Erfindung. Dabei sind als Fasern sowohl Endlosfilamente als auch geschnittene Stapelfasern mit herkömmlichen Abmessungen (zum Beispiel 38 mm Länge) und Kurzfasern zu verstehen. Zur Herstellung von Fasern kommen dabei sowohl Verfahren mit Abzugseinrichtungen nach einer oder mehreren Extrusionsdüsen als auch andere Verfahren, wie insbesondere Melt-Blowing-Verfahren, in Frage. Alternativ zu Fasern kann als Formkörper auch eine Cellulose aufweisende Folie hergestellt werden, d.h. ein flächiger und im Wesentlichen homogener Film mit oder aus Cellulose. Folien können insbesondere dadurch hergestellt werden, dass durch Einstellung der Prozessparameter eines Lyocell-Verfahrens ein Koagulieren zumindest teilweise erst nach Auftreffen der Filamente auf einer Aufnahmefläche ausgelöst wird. Unter Folien können flächige Celluloseformkörper verstanden werden, wobei die Dicke dieser Folien einstellbar ist (zum Beispiel durch Auswahl einer Anzahl seriell angeordneter Düsenbalken). Andere Ausführungsformen eines Formkörpers sind ein Gewebe und ein Vlies aus Cellulosefilamenten bzw. aus Cellulosefasern, insbesondere ein Spinnvlies aus integral miteinander verschmolzenen ("merging") im Wesentlichen kontinuierlichen Cellulosefilamenten ("melt blown"). Hierbei kann unter einem Gewebe insbesondere ein textiles Flächengebilde aus mindestens zwei (vorzugsweise rechtwinklig oder nahezu rechtwinklig) verkreuzten Fadensystemen (oder Fasersystemen) verstanden werden, wobei Fäden (oder Fasern) in Längsrichtung als Kettfäden und Fäden (oder Fasern) in Querrichtung als Schussfäden bezeichnet werden können. Ein Vlies oder Nonwoven kann als ungeordnetes (insbesondere in Wirrlage vorliegendes) Gebilde aus Filamenten oder Fasern oder geschnittenen Garnen begrenzter Länge bezeichnet werden, die zu einer Faserschicht oder einem Faserflor zusammengefügt und (insbesondere reibschlüssig) miteinander verbunden sind. Ein Formkörper kann auch in der Gestalt einer Kugel geschaffen werden. Als Formkörper können auch Cellulose aufweisende Partikel, wie insbesondere Beads (d.h. ein Granulat bzw. Kügelchen) oder Flakes, bereitgestellt werden, die in dieser Form weiterverarbeitet werden können. Mögliche Celluloseformkörper sind also auch partikuläre Strukturen wie Granulat, sphärische Pulver oder Fibride. Eine Formgebung eines Formkörpers erfolgt bevorzugt durch die Extrusion einer cellulosehaltigen Spinnlösung durch eine Extrusionsdüse, da auf diese Weise große Mengen der Celluloseformkörper mit sehr einheitlicher Form hergestellt werden können. Ein weiterer möglicher Celluloseformkörper ist ein Schwamm oder allgemeiner ein poröser Formkörper. Die genannten Formkörper können gemäß exemplarischen Ausführungsbeispielen zum Beispiel zur Herstellung von Garnen, Textilien, Gelen oder Verbundwerkstoffen verwendet werden.

Im Rahmen dieser Anmeldung kann unter dem Begriff "Lyocell-Verfahren" insbesondere ein Verfahren zum Herstellen von Cellulose nach einem Direkt-Lösemittelverfahren verstanden werden. Die Cellulose kann für das Lyocell-Verfahren aus einem Ausgangsstoff gewonnen werden, der diese Cellulose enthält. Der Ausgangsstoff kann bei dem Lyocell-Verfahren in einem geeigneten Lösungsmittel (insbesondere aufweisend tertiäre Aminoxide wie zum Beispiel N-Methylmorpholin-N-oxid (NMMO) und/oder ionische Flüssigkeiten, d.h. niedrig schmelzende Salze, die aus Kationen und Anionen aufgebaut sind) gelöst werden. Das Lösen kann insbesondere durch Wasserentzug und/oder ohne chemische Modifizierung erfolgen. Die erhaltene Lösung, die auch als Dope oder Spinnlösung bezeichnet werden kann, kann bei dem Lyocell-Verfahren anschließend durch eine oder mehrere Spinndüsen gepresst werden. Dadurch gebildete Filamente können während und/oder nach ihres freien oder gesteuerten Fallens durch einen Luftspalt in einem wasserhaltigen Bad (insbesondere in einem Bad mit wässriger NMMO-Lösung) und/oder in dem Luftspalt befindliche Luftfeuchtigkeit ausgefällt werden.

Im Rahmen dieser Anmeldung kann unter dem Begriff "Viskoseverfahren" insbesondere ein Verfahren zum Herstellen von Cellulose nach einem Nassspinnverfahren verstanden werden. Die Cellulose kann für das Viskoseverfahren aus einem Ausgangsstoff (insbesondere Holz oder ein Holzzellstoff) gewonnen werden, der diese Cellulose enthält. In aufeinanderfolgenden Prozessstufen kann bei dem Viskoseverfahren der Ausgangsstoff zuerst mit einer Base (zum Beispiel mit Natronlauge) behandelt werden, wodurch sich Alkalicellulose bildet. Bei einer anschließenden Umsetzung dieser Alkalicellulose mit Schwefelkohlenstoff bildet sich Cellulose-Xanthogenat. Daraus kann durch weitere Zugabe einer Base (insbesondere von Natronlauge) eine Viskose-Spinnlösung erzeugt werden, die durch eine oder mehrere Spinndüsen gepresst werden kann. In einem Spinnbad entstehen durch Koagulation Viskose-Filamente.

Im Rahmen dieser Anmeldung kann unter dem Begriff "Reste aus einer Kleidungsherstellung" insbesondere Ausschuss und/oder Verschnitt eines Cellulose aufweisenden oder daraus bestehenden Textils oder Garnes verstanden werden, wobei diese Reste während eines Verfahrens zum Herstellen von Kleidung anfallen. Beim Herstellen von Kleidung wird zum Beispiel ein Cellulose aufweisendes Textil als Ausgangsstoff hergestellt, aus dem dann flächige Teile (zum Beispiel in Form einer T-Shirt-Hälfte) ausgeschnitten werden. Übrig bleiben Reste, die gemäß einem exemplarischen Ausführungsbeispiel wieder einem Verfahren zum Herstellen eines Cellulose aufweisenden Formkörpers zugeführt werden können. Bei Resten aus einer Kleidungsherstellung kann es sich also um einen Cellulose aufweisenden oder daraus bestehenden Ausgangsstoff handeln, der zum Wiedergewinnen von Cellulose verwendet werden kann, bevor ein Verbraucher die Reste als Kleidung oder in anderer Weise verwendet hat. Reste aus einer Kleidungsherstellung können insbesondere aus im Wesentlichen reiner Cellulose gebildet sein, insbesondere ohne separate und nicht Cellulose aufweisende Fremdkörper (wie zum Beispiel Knöpfe, Textildruck oder Nähte).

Im Rahmen dieser Anmeldung können unter dem Begriff "Altkleider" insbesondere Cellulose aufweisende Kleidungsstücke verstanden werden, die bei Rückgewinnung zumindest eines Teils der Cellulose bereits von einem Verbraucher benutzt (insbesondere getragen) worden sind. Bei Altkleidern kann es sich also um einen Cellulose aufweisenden Ausgangsstoff handeln, der erhebliche Mengen von Fremdstoffen aufweisen kann (aber nicht muss) und zum Wiedergewinnen von Cellulose verwendet werden kann, nachdem ein Verbraucher die Altkleider als Kleidung oder in anderer Weise verwendet hat. Altkleider können insbesondere aus einer Mischung aus Cellulose und einem oder mehreren Fremdstoffen gebildet sein, insbesondere aufweisend (insbesondere bei Kleidungsstücken häufig verwendeten) synthetischen Kunststoff (wie zum Beispiel Polyester und/oder Elastan) und/oder separate und nicht Cellulose aufweisende Fremdkörper (wie zum Beispiel Knöpfe, Textildruck oder Nähte). Unter Polyester werden insbesondere Polymere mit Esterfunktionen (R-[-CO-O-]-R) in ihrer Hauptkette verstanden. Zu Polyestern gehören Polycarbonate und Polyethylenterephthalat. Unter Elastan wird insbesondere eine dehnbare Chemiefaser mit hoher Elastizität verstanden. Ein Elastan zugrundeliegendes Blockcopolymer kann einen Massenanteil von mindestens 85 % Polyurethan enthalten.

Im Rahmen dieser Anmeldung können unter dem Begriff "Partikel" insbesondere disperse Materialien verstanden werden, die sich vom umgebenden, kontinuierlichen Medium durch eine Phasengrenzfläche unterscheiden. Dies können z.B. die festen Bestandteile von Aerosolen, die festen Bestandteile von Suspensionen oder die Teilchen von Pulvern sein. Im Rahmen dieser Anmeldung kann unter dem Begriff "unlöslich" insbesondere verstanden werden, dass ein Stoff, insbesondere ein Partikel, nur schwer in einer Vielzahl von Lösungsmitteln lösbar ist. Die Löslichkeit kann hierbei die Eigenschaft eines Stoffes/Partikels bezeichnen, sich unter homogener Verteilung im Lösungsmittel zu vermischen, d.h. zu lösen. Beispielsweise kann unter 0,1 mol/L gelöster Stoff/Partikel als schwerlöslich, zwischen 0,1 und 1 mol/L als mäßig löslich und Löslichkeiten größer als 1 mol/L als leicht löslich bezeichnet werden. Weiterhin können beispielsweise weniger als 10 g/L, insbesondere weniger als 1 g/L, weiter insbesondere weniger als 0,1 g/L, eines Stoffes in einer Flüssigkeit als schwer löslich (unlöslich) angesehen werden. In einer einfachen Ausführungsform können z.B. Partikel in Wasser unlöslich sein. In einer weiteren Ausführungsform können beispielsweise Partikel in einem Lösungsmittel, insbesondere N-Methylmorpholin-N-oxid (NMMO), einer Spinnlösung in einem Lyocell-Verfahren unlöslich sein. In der vorliegenden Anmeldung kann sich der Begriff "unlöslich" insbesondere auf einen normalen Betriebszustand beziehen. Beispielsweise sind Partikel, z.B. Titandioxid, unter den normalen Betriebsbedingungen eines Lyocell-Verfahrens in der Spinnlösung unlöslich (i.e. verteilen sich nicht homogen).

Gemäß einem exemplarischen Ausführungsbeispiel wird die übliche Vorgehensweise überwunden, nichtlösliche Partikel, insbesondere Metalloxide wie Titandioxid, während eines Recyclings von Ausgangsstoffen zusätzlich zuzugeben. Bislang werden beispielsweise in einem Lyocell- oder Viskose-Verfahren die Partikel einer Spinnlösung zusätzlich zugeführt. Das Problem besteht hierbei darin, dass die Partikel sehr fein verteilt werden müssen, um z.B. eine gewünschte Mattierung bei geringen Materialmengen zu erreichen. Zu große Mengen an nichtlöslichen Partikeln machen die Fasern spröde und brüchig, da Aggregate bzw. Verklumpungen von nichtlöslichen Partikeln Störstellen in der Faser erzeugen. Die Agglomerationsneigung von Feinteilchen ist ein bekanntes Oberflächenphänomen und erfordert in der technologischen Praxis, besonders bei großtechnischer Anwendung einen erheblichen Aufwand zur Überwindung.

Gemäß einem exemplarischen Ausführungsbeispiel wird weiterhin die übliche Vorgehensweise überwunden, nichtlösliche Partikel, wie zum Beispiel Titandioxid, bei einem Recycling in hohem Maße zu entfernen. Für die Herstellung von Cellulose zum Einsatz in Lyocell- oder Viskoseverfahren können Ausgangsstoffe wie z.B. Altkleider verwendet werden. Bei der Aufbereitung dieser Ausgangsstoffe fallen verschiedene unerwünschte Fremdstoffe (siehe unlösliche Partikel) an, welche bislang entfernt werden müssen, u.a. damit die physikalischen/chemischen Eigenschaften einer recycelten Faser gegenüber einer nicht nicht-recycelten Faser ähnlich werden.

Überraschenderweise werden jedoch nichtlösliche Partikel aus einem festen Ausgangsstoff (z.B. Altkleider und/oder Textilverschnitte) beim Lösen sehr gut in eine Spinnlösung aufgenommen. Dies deshalb, weil die Partikel sehr gleichmäßig verteilt, sehr fein und vor Allem nicht agglomeriert vorliegen.

Erstaunlicherweise wurde nun gefunden, dass durch gezielte Steuerung von Konzentrationen von nichtlöslichen Partikeln in festen Ausgangsstoffen im Rahmen eines Wiederverwendens (inklusive des Recyclingprozesseses, beziehungsweise der Aufbereitung des Ausgangsstoffs) neue vorteilhafte Eigenschaften in einem herzustellenden regenerierten cellulosischen Formkörper bzw. dessen textilen Folgeprodukten erreicht werden können. Diese vorteilhafte Funktionalisierung von Restkonzentrationen nichtlöslicher Partikel aus dem festen Ausgangsstoff basiert vor allem auf der überraschend guten Feinverteilung und homogenen Verteilung der eigentlich unlöslichen Partikeln direkt aus dem festen Ausgangsstoff, z.B. innerhalb einer Spinnlösung.

Ein Ausführungsbeispiel der Erfindung kann somit auf der Idee basieren, dass eine Feinverteilung von nichtlöslichen Partikeln in einer Lyocell/Viskose-Spinnlösung, bzw. in einem daraus resultierenden regenerierten cellulosischen Formkörper, durch ein direktes Verwenden von festen Cellulose-haltigen Ausgangsstoffen erreicht werden kann, in welchen die nichtlöslichen Partikeln inkorporiert sind.

Die Ausführung der Erfindung, Verwenden von bereits dispergierten nichtlöslichen Partikeln aus einem festen Ausgangsstoff, löst durch die dadurch bereits vorhandene Feinverteilung der Partikel viele bekannte Förderprobleme, welche bei einer großtechnischen Anlage in der Zuführung und (Erst)-Verteilung von den unlöslichen Partikeln (z.B. Titandioxid) entstehen.

Im Weiteren werden zusätzliche Ausführungsbeispiele des Verfahrens und der Verwendung beschrieben.

Gemäß einem Ausführungsbeispiel weist der Ausgangsstoff Polymerfasern, insbesondere Cellulosefasern, auf, und die nichtlöslichen Partikel sind in den Polymerfasern des Ausgangsstoffs inkorporiert. Dies hat den Vorteil, dass durch Verwenden von in Fasern inkorporierten nichtlöslichen Partikeln eine sehr gute Feinverteilung (und homogene Verteilung) mit geringem Aufwand auf ressourcenschonende Weise erreicht werden kann. Ein gewünschter Mattierungseffekt wird dann auch bei deutlich niedrigeren Mengen an nichtlöslichen Partikeln erreicht.

Nichtlösliche Partikel wie z.B. Titandioxid können schwer dispergierbare Stoffe sein, welche zu hoher Klumpenbildung/Aggregation neigen können. Durch die Addition von Ausgangsstoffen, welche Polymerfasern und die darin gebundenen Partikel aufweisen, beispielsweise in einem Lyocell- oder Viskoseverfahren, kann die Feinverteilung der nichtlöslichen Partikel auf besonders einfache Art und Weise erfolgen. Eine besonders homogene Verteilung in einer Spinnlösung und dem herzustellenden Formkörper kann somit erreicht werden.

Die nichtlöslichen Partikel können in Cellulosefasern inkorporiert sein. Insbesondere bei Lyocell- bzw. Viskosefasern ist dies der Fall. In speziellen Fällen können die nichtlöslichen Partikel jedoch auch in Baumwollfasern inkorporiert sein. Ferner können die nichtlöslichen Partikel in Kunststoffasern, z.B. Polyester, Polyamid, Polyurethan, oder Elastan, inkorporiert sein.

Gemäß einem weiteren Ausführungsbeispiel weist das Erzeugen des regenerierten cellulosischen Formkörpers ein Lyocell-Verfahren oder ein Viskose-Verfahren auf. Dies hat den Vorteil, dass das beschriebene Verfahren direkt in etablierte und erprobte Prozesse integriert werden kann. Die genannten Verfahren sind in diesem Dokument detailliert beschrieben.

Gemäß einem weiteren Ausführungsbeispiel kann der Ausgangsstoff ganz oder teilweise Reste aus einer Kleidungsherstellung und/oder Altkleider (zum Beispiel Mischtextilien) aufweisen. Anders ausgedrückt können als zumindest ein Teil des Ausgangsstoffs Textilien, insbesondere Reste aus einer Kleidungsherstellung und/oder Altkleider, verwendet werden. Besonders bevorzugt ist das Heranziehen von Resten aus der Kleidungsherstellung, da derartiger Verschnitt bzw. Ausschuss häufig einen sehr hohen Reinheitsgrad aufweist. Insbesondere kann ein solches Pre-Consumer-Textil frei von Fremdkörpern, wie Knöpfen, Nähten oder Textildruck sein. Zum Beispiel können Reste aus der Kleidungsherstellung im Wesentlichen gewobene (und optional gefärbte) Cellulose aufweisen, sodass solche Reste bedarfsweise auch direkt in Lösung überführt werden können, um daraus mittels des Lyocell Verfahrens Cellulose rückzugewinnen. Bei Altkleidern oder Post-Consumer-Textilien können größere Fremdkörper wie Knöpfe, Drucke und Nähte bereits beim oder nach dem mechanischen Zerkleinern abgetrennt werden. Andere Fremdstoffe der Reste oder Altkleider, wie zum Beispiel Farben und synthetische Kunststoffe (wie Polyester und Elastan), können vor dem Lösen eines entsprechenden Ausgangsstoffs zum Bilden des Dopes bzw. der Spinnlösung ganz oder teilweise entfernt werden, können aber auch zumindest teilweise in der Spinnlösung verbleiben.

Gemäß einem weiteren Ausführungsbeispiel weisen die nichtlöslichen Partikel anorganische Partikel, insbesondere Metalloxid, auf oder bestehen aus diesen.

Gemäß einem weiteren Ausführungsbeispiel weisen die anorganischen Partikel zumindest eines aus der Gruppe auf, welche aufweist Titandioxid, TiO₂, Aluminiumoxid, Al₂O₃, Magnesiumoxid, MgO, Siliciumoxid, SiO₂, Ceroxid, CeO₂, Magnesiumhydroxid, Mg(OH)₂, Aluminiumhydroxid, Al(OH)₃, Bornitrid, BN, Bariumsulfat, BaSO₄, und Zinkoxid, ZnO. Dies hat den Vorteil, dass Industrierelevante Stoffe mit den gewünschten physikalischen/chemischen Eigenschaften, welche in der Mehrzahl von festen Ausgangsstoffen bereits vorhanden sind, direkt dem Recycling-Verfahren zugeführt werden können.

Titandioxid ist ein schwer dispergierbarer Stoff, welcher zu hoher Klumpenbildung neigt. Durch die Addition von Titandioxid-haltigen festen Ausgangsstoffen zu einem Recycling-Verfahren (z.B. Lyocell-Verfahren) kann die Feinverteilung der Titandioxid-Partikel auf besonders einfache Art und Weise erfolgen. Eine besonders homogene Verteilung in einer Spinnlösung kann somit erreicht werden.

Analog zu den mit Titandioxid als Beispiel aufgezeigten Zusammenhängen lässt sich das beschriebene Verfahren des Verwendens von bereits in Ausgangsstoffen, insbesondere Textilien, enthaltenen Metalloxiden auch für andere Verbindungen anwenden. Solche Metallverbindungen sind oben bereits genannt. Die Funktionalisierung dieser Oxide kann dann zum Ausbilden unterschiedlicher Eigenschaften an einem erhaltenen Formkörper geeignet sein. Diese Eigenschaften können z. B. Flammschutz oder Biozid-Wirkung aufweisen.

Gemäß einem weiteren Ausführungsbeispiel weisen die nichtlöslichen Partikel synthetischen Kunststoff, insbesondere Polyester und/oder Elastan, auf oder bestehen aus diesen.

Es hat sich überraschenderweise herausgestellt, dass verbleibende Fremdstoffe, zum Beispiel Polyester bzw. Elastan, das Verfahren nicht stören und die Qualität der wiedergewonnenen (Lyocell)-Cellulose nicht negativ beeinflussen. Im Gegenteil, gewisse Mengen von Elastan können in den hergestellten Cellulosefasern verbleiben, ohne deren Eigenschaften zu verschlechtern. Auch gewisse Mengen verbleibenden Polyesters stören das erhaltene Produkt nicht, sondern können sogar die mechanische Integrität des herzustellenden Formkörpers stärken. Dies kann auch für weitere synthetische Kunststoffe wie Polyamide zutreffen.

Gemäß einem weiteren Ausführungsbeispiel weisen die nichtlöslichen Partikel zumindest eine der im Folgenden beschriebenen Eigenschaften auf.

Die eingesetzten Mengen von nichtlöslichen Partikeln, z.B. Titandioxid, in dem Ausgangsstoff liegen bei etwa 0,05 % bis 3 %, insbesondere bei 0,25 % bis 1,5 %, wobei Korngrößen von unter 2,0 Mikrometer Durchmesser angestrebt werden können, um Störungen in der Faserstruktur möglichst gering zu halten.

Die nichtlöslichen Partikel sind nichtlöslich in Lösungsmitteln, die in Lyocell-Verfahren, insbesondere N-Methylmorpholin-N-oxid, NMMO, und/oder Viskose-Verfahren verwendet werden. Ferner können die nichtlöslichen Partikel nichtlöslich in Wasser sein. Weiterhin liegen die nichtlöslichen Partikel als ein dispergiertes Agglomerat von Molekülen vor, welche von einem Lösungsmittel, insbesondere von Wasser, umgeben sind. Obwohl die nichtlöslichen Partikel in dem verwendeten Lösungsmittel nicht löslich sind, können sie dennoch nach dem beschriebenen Verfahren feinverteilt dispergiert vorliegen. Eine Spinnlösung kann zusätzlich zu einem Lösungsmittel, z.B. NMMO, Wasser aufweisen. Daher können die Moleküle der nichtlöslichen Partikel von Wassermolekülen umgeben sein.

Gemäß einem weiteren Ausführungsbeispiel weist das Verfahren ferner auf: i) Zuführen von zumindest einem weiteren Ausgangsstoff der Cellulose und nichtlösliche Partikel aufweist, wobei der Anteil an nichtlöslichen Partikeln in dem Ausgangsstoff und dem weiteren Ausgangsstoff verschieden ist, und ii) Erzeugen des regenerierten cellulosischen Formkörpers basierend auf dem Ausgangsstoff und dem weiteren Ausgangsstoff derart, dass der regenerierte cellulosische Formkörper einen vorbestimmten Anteil der nichtlöslichen Partikel enthält. Dies hat den Vorteil, dass im Wesentlichen ohne zusätzlichen Einsatz von chemischen Verfahren die gewünschten Anteile von nichtlöslichen Partikeln entsprechend eingestellt bzw. beeinflusst werden können.

In einer bevorzugten Ausführungsform werden in Ausgangsstoffen enthaltene Restmengen von nichtlöslichen Partikeln wie Titandioxid auf eine spezifische Menge eingestellt. Der nach Zugabe von mehreren spezifischen Ausgangsstoffen hergestellte regenerierte cellulosische Formkörper kann dann gewünschte Partikel-Konzentrationen und entsprechend spezifische chemisch/physikalische Eigenschaften aufweisen. Dies können beispielsweise Eigenschaften sein, welche denen einer nicht-recycelten Lyocell-Faser entsprechen.

Insbesondere lässt sich durch Mischen von verschiedenen Zusammensetzungen von Ausgangsstoffen wie Altkleidern und/oder Resten aus der Kleiderherstellung eine spezifische Eigenschaft, z.B. die Konzentration von Titandioxid, einstellen und somit die nachfolgende Verwendung und/oder Funktionalisierung gezielt steuern.

Gemäß einem weiteren Ausführungsbeispiel weist das Verfahren ferner auf: Auswaschen von nichtlöslichen Partikeln aus dem regenerierten cellulosischen Formkörper derart, dass der Anteil von nichtlöslichen Partikeln in dem regenerierten cellulosischen Formkörper um 0,1%, insbesondere um 1%, reduziert wird. Dies hat den Vorteil, dass physikalische/chemische Eigenschaften des herzustellenden Formkörpers gezielt gesteuert werden können.

Beispielsweise können nichtlösliche Partikel wie z.B. Titandioxid während der Herstellung des Formkörpers eine Funktionalisierung als Störstelleneinbringung im Faserbildungsprozess erfüllen. Nach der Herstellung hat zumindest ein Teil der Partikel seine Funktion erfüllt und kann entsprechend entfernt werden. Weiterhin können durch eine Anteilsreduktion der nichtlöslichen Partikel bestimmte Eigenschaften gezielt gesteuert werden. Beispielsweise können die optischen Eigenschaften verändert werden, insbesondere kann die Mattierung reduziert werden.

Gemäß einem weiteren Ausführungsbeispiel liegen die nicht-löslichen Partikel homogen verteilt in der Spinnlösung vor, wobei die Spinnlösung mehr als 0,01 Gewichtsprozent, weiter insbesondere mehr als 0,1 Gewichtsprozent, von den nichtlöslichen Partikel aufweist (bezogen auf das Gesamtgewicht der Spinnlösung). Dies hat den Vorteil, dass ein überraschend hoher Anteil von nichtlöslichen Partikeln in der Spinnlösung dispergiert und gleichzeitig feinverteilt sein kann.

Nichtlösliche Partikel sind schwer dispergierbar und neigen zur Klumpenbildung. Entsprechend schwierig bis unmöglich ist es, diese Partikel in höheren Anteilen in einer Spinnlösung zu dispergieren, ganz zu schweigen davon, dass diese Partikel gleichzeitig feinverteilt vorliegen sollen.

Bislang wird bei der Lyocell-Produktion zur Herstellung mattierter Fasern der Spinnlösung etwa 0,75 % Titandioxid beigefügt. Dieser Standardprozess (ohne Recyclingmaterialien) ist aber wegen der Partikelverteilung nicht trivial. Einerseits müssen die Partikel so klein sein, dass sie Spinndüsen passieren können. Dies führt dann bei der nachfolgenden, zwingend notwendigen, Verstreckung im Spinnvorgang zu bekannten Problemen wie Störstellen. Anderenfalls sind die Partikel an sich klein genug, neigen dann aber zu Agglomerationen. Weiter ist zu beachten, dass während einer Extrusion der Partikel durch Spinndüsen diese in einem ausgewogenen Verhältnis zu dem noch nicht verstreckten flüssigen Materialquerschnitt sind. Bei der nachfolgenden Verstreckung werden die Faserelemente in eine Form von sehr viel mehr Länge gegenüber dem Durchmesser gebracht. Die mitintegrierten Titandioxid-Partikel verändern aber ihre Größe nicht und werden so aufgrund der sich verändernden Größenverhältnisse zu Ansätzen von Sollbruchstellen. Für das Beifügen von Feststoffen wie Titandioxid in eine Spinnlösung zur Herstellung eines Lyocell-Formkörpers ist somit die Homogenisierung derartiger Pigmente von besonderer Wichtigkeit, da es sonst zu ungewollten Schwachstellen in den Filamenten kommt. Diese Homogenisierung bzw. Feinverteilung kann normalerweise nur durch massive Scherkräfte oder Zusatzoptionen, wie Aufschließung durch Ultraschall, erreicht werden.

Gemäß dem oben beschriebenen Verfahren ist es jedoch möglich eine Spinnlösung bereitzustellen, welche die unlöslichen Partikel in einer ungewöhnlich hohen Konzentration und gleichzeitig homogen verteilt aufweist.

Die Ausführung der Erfindung, Verwenden der unlöslichen Partikel aus festen Ausgangsstoffen, beinhaltet nämlich bereits eine hochgradige Feinverteilung der Partikel in dem Ausgangsstoff (und entsprechend in der Spinnlösung), so dass auf aufwändige Zusatzprozesse zur Homogenisierung verzichtet werden kann. Alternativ kann bei Beibehaltung dieser Zusatzprozesse eine noch bessere Feinverteilung erreicht werden.

Gemäß einem Ausführungsbeispiel kann das Verfahren ein Zerkleinern, insbesondere ein mechanisches Zerkleinern, weiter insbesondere ein Schreddern, des Ausgangsstoffs vor dem Lösen des Ausgangsstoffs in dem Lösungsmittel aufweisen. Zum Beispiel kann durch das Zerkleinern eine Verringerung der Größe des Ausgangsstoffs auf Fasergröße erfolgen. Insbesondere kann ein so vorbereiteter Ausgangsstoff auch ohne chemische Vorbehandlung direkt in Lösung überführt werden, um eine zähviskose Spinnmasse zu erzeugen.

Gemäß einem Ausführungsbeispiel kann das Verfahren ein Nachbearbeiten der ausgefällten Cellulose zum Erhalten des Formkörpers aus der Vorform des Formkörpers aufweisen. Ein solches optionales Nachbearbeiten kann zum Beispiel ein Trocknen, Imprägnieren und/oder Umformen der erhaltenen Cellulose-Filamente aufweisen. Durch ein entsprechendes Nachbearbeiten ist es möglich, am Ende des Verfahrens anwendungsspezifisch die Formkörperherstellung abzuschließen.

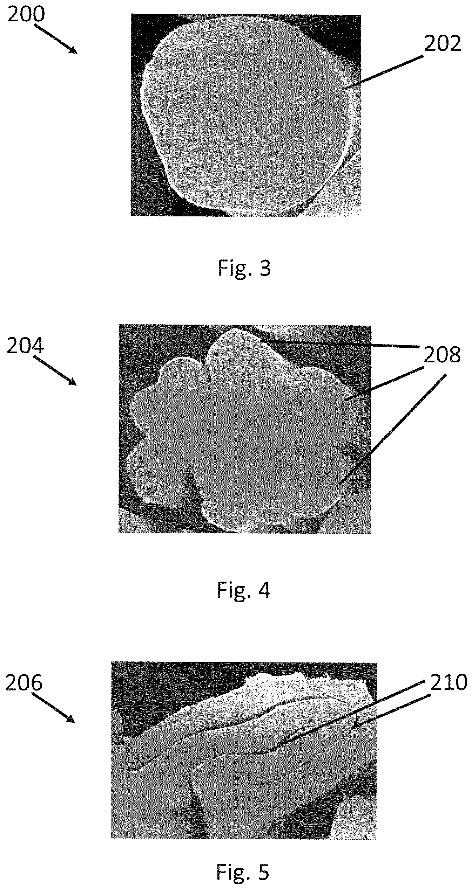

Gemäß einem Ausführungsbeispiel können Fasern des Ausgangsstoffs und/oder Fasern des Formkörpers eine glatte runde Außenfläche aufweisen. Wie in Figur 3 dargestellt, zeichnen sich mittels des Lyocell-Verfahrens extrahierte Cellulosefasern durch eine derartige Form aus und heben sich daher von anderen Faserformen ab, wie sie in natürlicher Baumwolle vorkommen oder mittels eines Viskoseverfahrens erhalten werden.

Die erfindungsgemäß hergestellten Formkörper können zum Beispiel als Verpackungsmaterial, Fasermaterial, Textilverbundstoffe, Faserverbundstoffe, Faservliese, Nadelfilze, Polsterwatte, Gewebe, Gestricke, als Heimtextilien, wie Bettwäsche, als Kleidungsstücke, als Füllstoff, Beflockungsstoff, Krankenhaustextilien, wie Unterlagen, Windel oder Matratzen, als Stoff für Wärmedecken, Schuheinlagen, sowie Wundverbände verwendet werden. Ausführungsbeispiele der Erfindung können sowohl in verschiedensten technischen Bereichen als auch in der Medizin und in Kosmetik und Wellness anwendbar sein. In der Medizin können zum Beispiel Materialien zur Wundbehandlung und Wundheilung aus einem Träger, der die mechanischen Eigenschaften bestimmt, und einem biokompatiblem Beschichtungsmaterial aufgebaut sein, das besonders verträglich mit der Haut und mit der Oberfläche der Wunde ist. Zahlreiche andere Anwendungen sind möglich.

Im Folgenden werden exemplarische Ausführungsbeispiele der vorliegenden Erfindung mit Verweis auf die folgenden Figuren detailliert beschrieben.
Figur 1 zeigt ein Flussdiagramm eines Verfahrens zum Herstellen eines regenerierten cellulosischen Formkörpers gemäß einem exemplarischen Ausführungsbeispiel der Erfindung.
Figur 2 zeigt eine Apparatur zum Herstellen eines regenerierten cellulosischen Formkörpers mittels eines Lyocell-Verfahrens gemäß einem exemplarischen Ausführungsbeispiel der Erfindung.
Figur 3 zeigt eine mittels eines Lyocell-Verfahrens hergestellte Cellulosefaser.
Figur 4 zeigt eine mittels eines Viskoseverfahrens hergestellte Cellulosefaser.
Figur 5 zeigt eine natürliche Cellulosefaser aus einer Baumwollpflanze.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem exemplarischen Ausführungsbeispiel der Erfindung werden aus Ausgangsstoffen gewünschte Anteile von Titandioxid eingestellt. Der so hergestellte Zellstoff oder eine aus unterschiedlichen Zellstoffen zusammengestellte Mischung mit dem gewünschten Anteil an Titandioxid wird zu einem Lyocell- und/oder einem Viskose-Formkörper verarbeitet. Nach weiteren Verarbeitungsschritten enthält die resultierende Stapelfaser einen gewünschten Anteil von Titandioxid. Eine derartige Faser erlaubt nun verschiedene spezielle Anwendungen in welchem das darin enthaltene Titandioxid zum Tragen kommt. Beispielsweise die Herstellung eines Endproduktes mit einer Sonnenschutzfunktion durch das darin enthaltene Titandioxid. Ferner kann eine weniger belastbare Faser (geringeres Arbeitsvermögen) hergestellt werden. Dies wird dadurch erreicht, dass die eingebetteten Titandioxid-Partikel als Störstellen bei der Faserbildung agieren und so das Arbeitsvermögen reduzieren.

Gemäß einem weiteren exemplarischen Ausführungsbeispiel wird eine erfindungsgemäße Faser mit einer reinen Lyocell-Cellulose, welche kein Titandioxid enthält, gemischt. Dadurch werden durch Verschnitt geeignete mechanische, optische und chemische Eigenschaften des resultierenden Produktes (z.B. einem Garn) eingestellt. Die recycelte Cellulose mit Titandioxid-Anteil dient in diesem Fall als "Mattierungsquelle".

Gemäß einem weiteren exemplarischen Ausführungsbeispiel wird der erfindungsgemäße Titandioxid-haltige Rückstand aus der Aufbereitung des Ausgangsstoffs gemeinsam mit Zellstoff ohne Titandioxid in NMMO gelöst und versponnen. Die recycelte Cellulose mit Titandioxid-Anteil dient in diesem Fall als "Mattierungsquelle".

Gemäß einem weiteren exemplarischen Ausführungsbeispiel kann die beschriebene Titandioxid Konzentration am fertigen (Lyocell)-Formkörper innerhalb einer Genauigkeit von +/- 10 % nachgewiesen werden.

Gemäß einem weiteren exemplarischen Ausführungsbeispiel sind Cellulosefasern, die aus einem Viskose- oder Lyocell-Verfahren stammen, und bis zu 2 % Titandioxid enthalten, besonders wertvoll für die erneute Verwendung in Recyclingverfahren. Titandioxid aus diesen Fasern wird beim erneuten Lösen des Rohstoffes in NMMO sehr gut in der Spinnlösung aufgenommen. Dies deshalb, weil die Partikel sehr gleichmäßig verteilt, sehr fein und vor Allem nicht agglomeriert vorliegen. Die Agglomerationsneigung von Feinteilchen ist ein bekanntes Oberflächenphänomen und erfordert in der technologischen Praxis, besonders bei großtechnischer Anwendung, einen erheblichen Aufwand um überwunden zu werden. Eine typische Materialmischung in einem Nonwoven Produkt besteht aus beispielsweise 75% PET und 25% Lyocell, wobei beide z.B. 0,75 % TiO₂ enthalten. Beim Recyceln werden beide Fasern getrennt: PET wird entweder in Lösungsmitteln selektiv gelöst oder alkalisch verseift. In beiden Fällen bleibt die Cellulosefaser und der Gesamtanteil TiO₂, aus beiden Fasern, im Rückstand. Die Cellulose mit dem darin enthaltenen TiO₂ wird im Sinne des Recyclinggedankens erneut in NMMO gelöst und dem Lyocell-Prozess zugeführt. Es entsteht so beispielshaft eine Lyocellfaser mit der etwa vierfachen Menge TiO₂ in optimaler Verteilung.

Gemäß einem weiteren exemplarischen Ausführungsbeispiel können die üblicherweise für Mattierungszwecke eingesetzten Titandioxid-Strukturen durch das Recycling wiederum für alle mit Titandioxid möglichen physikalischen und chemischen Eigenschaftsveränderungen einsetzt werden, da sie durch den Recyclingprozess keine Abnutzung erleiden. Diese Eigenschaften umfassen: i) photokatalytisches Verhalten, ii) Mattierung, iii) UV-Schutz, iv) einstellbare (über Partikelgröße und Verteilung), selektive (wellenlängenabhängige) Transparenz/Reflektion, und vi) eine bessere Eignung als Marker.

Gemäß einem weiteren exemplarischen Ausführungsbeispiel ist eine weitere Variante zur Erhöhung der Feinverteilung das mehrfache Lösen. Hierbei wird die fertige Faser wieder in NMMO/Wasser gelösten, erneut durch den Spinnprozess geschleust und somit kann eine bessere Feinverteilung erreicht werden. Durch ein mehrfaches Lösen findet auch eine bessere Feinverteilung der Titandioxid Partikel statt.

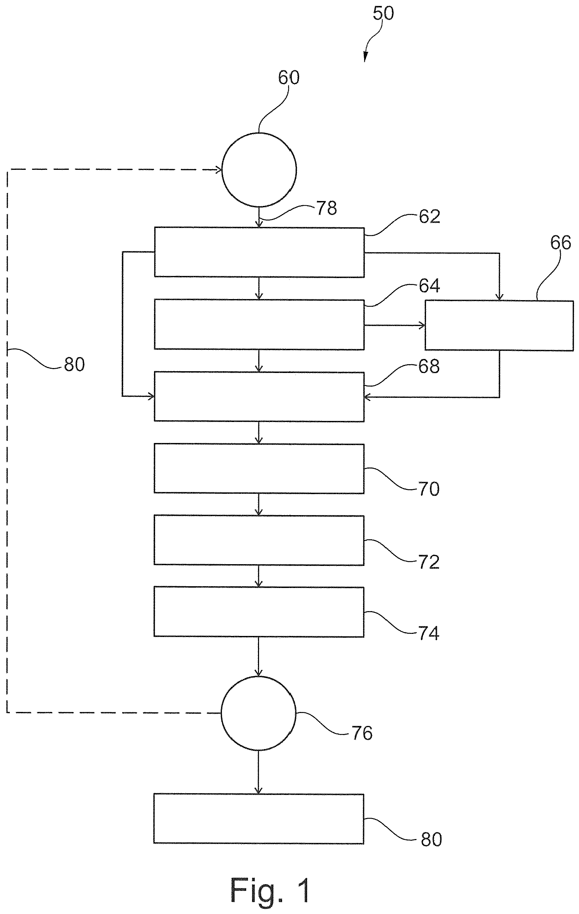

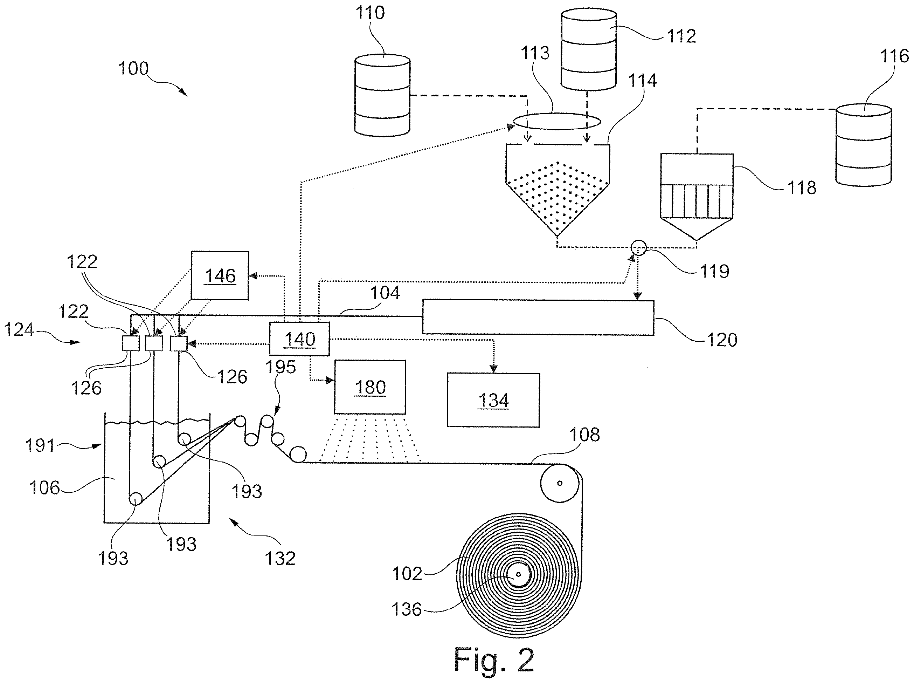

**Figur 1** zeigt ein Flussdiagramm 50 eines Verfahrens zum Herstellen eines regenerierten cellulosischen Formkörpers 102 (vergleiche Figur 2) gemäß einem exemplarischen Ausführungsbeispiel der Erfindung.

Der Ausgangsstoff 110 (vergleiche Figur 2) weist Cellulose und nichtlösliche Partikel auf und liegt in Form von Altkleidern und/oder Resten aus einer Kleidungsherstellung vor.

Wie mit Block 60 dargestellt, kann ein so hergestellter Ausgangsstoff 110, im Falle von Altkleidern, durch einen Verbraucher verwendet werden, zum Beispiel als Kleidungsstück. Wenn der Verbraucher das Kleidungsstück entsorgt, kann dieses als Post-Consumer Ausgangsstoff 110 für ein nachfolgendes Lyocell- oder Viskoseverfahren verwendet werden, wobei ersteres im Weiteren näher beschrieben wird.

Es ist alternativ oder ergänzend ebenso möglich, einen Cellulose aufweisenden Pre-Consumer Ausgangsstoff 110 zu verwenden, zum Beispiel Verschnittreste aus der Kleidungsherstellung, insofern diese die nichtlöslichen Partikel aufweisen.

Im Weiteren wird beschrieben, wie auf Basis des zumindest teilweise Cellulose aufweisenden Ausgangsstoffs 110 Formkörper 102 aus Cellulose gemäß einem Ausführungsbeispiel der Erfindung hergestellt werden können. Hierfür wird der Ausgangsstoff 110 einer Apparatur 100 (siehe Figur 2) zum Durchführen eines Lyocell-Verfahrens zugeführt, vergleiche Bezugszeichen 78.

Dort kann zunächst ein mechanisches Zerkleinern 62 des Ausgangsstoffs 110 durch Schreddern erfolgen. Dadurch können vor allem große nichtcellulosische Störstoffe aus dem Ausgangsstoff 110 entfernt werden, beispielsweise Knöpfe, Nähte und Drucke der Altkleider, die zum Erzeugen des Ausgangsstoffs 110 zumindest teilweise verwendet worden sind. Durch das mechanische Zerkleinern 62 kann zum Beispiel der Ausgangsstoff 110 in Einzelfasern zertrennt werden.

Es ist auch möglich (siehe Block 64), den Cellulose aufweisenden Ausgangsstoff 110 mit anderen Cellulose aufweisenden Materialien gemeinsam für das nachfolgende Lyocell-Verfahren einzusetzen. Somit kann der Ausgangsstoff 110 mit einem weiteren Ausgangsstoff vermischt werden, welcher Cellulose und nichtlösliche Partikel aufweist, siehe Block 64. Dieser zugeführte weitere Ausgangsstoff weist einen Anteil an nichtlöslichen Partikeln auf, welcher von dem Anteil an nichtlöslichen Partikeln in dem Ausgangsstoff 110 verschieden ist. Das Erzeugen des regenerierten cellulosischen Formkörpers kann nun basierend auf dem Ausgangsstoff 110 und dem weiteren Ausgangsstoff ausgeführt werden, so dass der regenerierte cellulosische Formkörper 102 einen vorbestimmten Anteil der nichtlöslichen Partikel enthält. Der weitere Ausgangsstoff kann alternativ oder ergänzend zum Beispiel auch Reste aus einer Kleidungsherstellung aufweisen.

Unmittelbar nach dem mechanischen Zerkleinern 62 bzw. unmittelbar nach dem Mischen 64 kann ein direktes Lösen 68 des (reinen bzw. gemischten) Ausgangsstoffs 110 in einem weiteren Lösungsmittel 116 (zum Beispiel tertiäre Aminoxide wie zum Beispiel N-Methylmorpholin-N-oxid (NMMO)) vorteilhaft ohne chemische Vorbehandlung erfolgen. Genauer gesagt kann der mechanisch zerkleinerte (und optional gemischte) Ausgangsstoff 110 insbesondere ohne chemische Reinigung und ohne Einstellung der Viskosität direkt in Lösung übergeführt werden. Auf diese Weise kann das Herstellungs- bzw. Recyclingverfahren außergewöhnlich einfach und schnell sowie umweltfreundlich durchgeführt werden. Es hat sich überraschenderweise herausgestellt, dass nach dem mechanischen Zerkleinern 62 in dem Ausgangsstoff 110 verbleibende Fremdstoffe (zum Beispiel Polyester bzw. Elastan) das Lyocell-Verfahren nicht stören und die Qualität der wiedergewonnenen Lyocell-Cellulose nicht negativ beeinflussen. Im Gegenteil, gewisse Mengen von Elastan können in den hergestellten Cellulosefasern verbleiben, ohne deren Eigenschaften zu verschlechtern. Auch gewisse Mengen verbleibenden Polyesters stören das erhaltene Produkt nicht, sondern können sogar die mechanische Integrität des herzustellenden Formkörpers 102 stärken.

Alternativ kann das Verfahren nach dem mechanischen Zerkleinern 62 (oder nach dem Mischen 64) und vor dem Lösen 68 ein optionales chemisches Reinigen 66 des Ausgangsstoffs 110 aufweisen. Ein solches optionales Reinigen 66 kann zum Beispiel ein zumindest teilweises Entfernen von Farbstoffen durch Bleichen aufweisen. Dadurch ist es möglich, den Ausgangsstoff 110 vor einem nachfolgenden Lösen 68 des Ausgangsstoffs 110 in Lösungsmittel 116 ganz oder teilweise zu entfärben, beispielsweise um weiße oder graue Formkörper 102 herzustellen. Es ist alternativ oder ergänzend auch möglich, dass im Rahmen des optionalen chemischen Reinigens 66 der Ausgangsstoff 110 (vor oder nach seinem Lösen 68) zumindest teilweise von Fasern des Ausgangsstoffs 110 vernetzenden Vernetzern befreit wird. In Anwendungen, in denen solche Vernetzer zwischen den Fasern des Ausgangsstoffs 110 vorliegen, kann der Ausgangsstoff 110 zum Beispiel mittels einer alkalischen oder einer sauren Vorbehandlung von diesen Vernetzern ganz oder teilweise befreit werden. Dies verbessert die Lösbarkeit des Ausgangsstoffs 110 zusätzlich. Mittels des Reinigens 66 kann optional zumindest ein Teil nichtlöslicher Partikel entfernt werden, falls dies gewünscht ist. Beispielsweise kann auf diese Weise der Anteil von nichtlöslichen Partikeln in dem herzustellenden Formkörper 102 eingestellt bzw. beeinflusst werden.

Nach dem Lösen 68 des Ausgangsstoffs 110 in Lösungsmittel (bevorzugt NMMO) kann die erhaltene Lyocell-Spinnlösung 104 durch eine oder mehrere Spinndüsen gepresst werden, wodurch Fäden bzw. Filamente honigzäher Viskosität entstehen (siehe Block 70, der dieses Spinnen betrifft).

Während und/oder nach dem Fallen dieser Fäden bzw. Filamente werden diese in Wirkverbindung mit einem wässrigen Milieu gebracht und dadurch verdünnt. Die Konzentration des Lösungsmittels 116 der Fäden bzw. Filamente wird dadurch in einem wässrigen Nebel bzw. einem wässrigen Flüssigkeitsbad so weit reduziert, dass die Lyocell-Spinnlösung in eine feste Phase aus Cellulose-Filamenten überführt wird. Anders ausgedrückt kommt es zu einem Präzipitieren, Fällen oder Koagulieren der Cellulose-Filamente, siehe Bezugszeichen 72. Dadurch wird eine Vorform des Formkörpers 102 erhalten.

Das Erzeugen 80 des Cellulose und nichtlösliche Partikel aufweisenden Formkörpers 102, insbesondere das Lösen 68, das Spinnen 70 und das nachfolgende Ausfällen 72, mittels eines Lyocell-Verfahrens wird also basierend auf einem Ausgangsstoff 110 durchgeführt, der seinerseits Cellulose und nichtlösliche Partikel aufweist.

Ferner kann das Verfahren ein Nachbearbeiten 74 der ausgefällten Lyocell-Cellulose zum Erhalten des Formkörpers 102 aus der Vorform des Formkörpers 110 aufweisen. Eine solche Nachbearbeitung kann zum Beispiel ein Trocknen, Imprägnieren und/oder Umformen der erhaltenen Filamente zu dem finalen Formkörper 102 umfassen. Zum Beispiel kann der Formkörper 102 durch das beschriebene Herstellungsverfahren zu Fasern, einer Folie, einem Gewebe, einem Vlies, einer Kugel, einem porösen Schwamm oder Beads verarbeitet werden und dann einer weiteren Nutzung zugeführt werden (vergleiche Bezugszeichen 76).

Mit Vorteil können nach Nutzung des Formkörpers 102 dessen Cellulose und nichtlösliche Partikel von neuem wiedergewonnen werden, indem ein weiteres Verfahren entsprechend der Verfahrensschritte zwischen Bezugszeichen 78 und 74 durchgeführt wird (siehe Block 80). Alternativ können die Cellulose und die nichtlöslichen Partikel des Formkörpers 102 in einem anderen Verfahren (siehe weitere Block 80), beispielsweise einem Viskoseverfahren, wiedergewonnen werden. Diese mehrfache Wiederholbarkeit des Recyclings mittels wiederholter Verfahrensstufen wird durch die Erkenntnis ermöglicht, dass eine Feinverteilung von nichtlöslichen Partikeln überraschend gut durch Recyceln ermöglicht ist.

**Figur 2** zeigt eine Apparatur 100 zum Herstellen eines regenerierten cellulosischen Formkörpers 102 mittels eines Lyocell-Verfahrens auf Basis eines Ausgangsstoffs, welcher Cellulose und nichtlösliche Partikel aufweist, gemäß einem exemplarischen Ausführungsbeispiel der Erfindung, das bezugnehmend auf Figur 1 beschrieben wurde.

Figur 2 zeigt also eine Apparatur 100 gemäß einem exemplarischen Ausführungsbeispiel der Erfindung zum Herstellen eines Cellulose aufweisenden Formkörpers 102, der zum Beispiel in Form eines Vlieses (Nonwoven), als Faser, Folie, Kugel, Textilgewebe, Schwamm oder in Form von Beads oder Flakes hergestellt werden kann. Gemäß Figur 2 wird der Formkörper 102 direkt aus einer Spinnlösung 104 hergestellt. Letztere wird mittels eines Koagulations-Fluids 106 (insbesondere aus Luftfeuchtigkeit) und/oder eines Koagulations-Bads 191 (beispielsweise ein Wasserbad, das optional tertiäre Aminoxide wie zum Beispiel N-Methylmorpholin-N-oxid (NMMO) aufweist) in Cellulosefasern 108 als Formkörper 102 umgewandelt. Mittels der Apparatur 100 kann ein Lyocell-Verfahren ausgeführt werden. Auf diese Weise können als Formkörper 102 zum Beispiel im Wesentlichen endlose Filamente oder Fasern 108 oder Mischungen im Wesentlichen endloser Filamente und Fasern 108 diskreter Länge hergestellt werden. Eine Mehrzahl von Düsen, die jeweils eine oder mehrere Öffnungen 126 (die auch als Spinnlöcher bezeichnet werden können) haben, sind bereitgestellt, um Lyocell-Spinnlösung 104 auszustoßen.

Wie Figur 2 entnommen werden kann, kann einem Speichertank 114 über eine Dosiereinrichtung 113 ein Cellulose basierter Ausgangsstoff 110 zugeführt werden.

Gemäß einem Ausführungsbeispiel kann ein Wassereintrag in den Cellulose basierten Ausgangsstoff 110 durch ein unten näher beschriebenes Lösungsmittel 116 (insbesondere NMMO) erfolgen. Auch kann der Cellulose basierte Ausgangsstoff 110 selbst bereits eine gewisse Restfeuchte enthalten (trockener Zellstoff zum Beispiel hat häufig eine Restfeuchte von 5 Gewichtsprozent bis 8 Gewichtsprozent). Insbesondere kann gemäß dem beschriebenen Ausführungsbeispiel der Ausgangsstoff 110 ohne Vorbefeuchtung direkt in eine Mischung aus Wasser und Lösungsmittel 116 gegeben werden. Ein in Figur 2 gezeigter optionaler Wasserbehälter 112 kann dann weggelassen werden.

Gemäß einem alternativen Ausführungsbeispiel kann der Cellulose aufweisende Ausgangsstoff 110 zusätzlich angefeuchtet werden, um dadurch feuchte Cellulose bereitzustellen. Zu diesem Zweck kann Wasser aus einem optionalen Wasserbehälter 112 dem Speichertank 114 über die Dosiereinrichtung 113 zugeführt werden. Daher kann die Dosiereinrichtung 113, gesteuert mittels einer Steuereinrichtung 140, dem Speichertank 114 einstellbare relative Mengen von Wasser und Ausgangsstoff 110 zuführen.

Ein geeignetes Lösungsmittel 116, bevorzugt tertiäre Aminoxide wie zum Beispiel N-Methylmorpholin-N-oxid (NMMO), beziehungsweise eine wässrige Mischung des Lösungsmittels 116, zum Beispiel eine 76%ige Lösung von NMMO in Wasser, ist in einem Lösungsmittelbehälter enthalten. Die Konzentration des Lösungsmittels 116 kann in einer Konzentriereinrichtung 118 entweder durch Zugabe von reinem Lösemittel oder Wasser eingestellt werden. Das Lösungsmittel 116 kann dann mit dem Ausgangsstoff 110 mit definierbaren relativen Mengen in einer Mischeinheit 119 gemischt werden. Auch die Mischeinheit 119 kann mittels der Steuereinheit 140 gesteuert werden. Dadurch wird der Cellulose aufweisende Ausgangsstoff 110 in dem konzentrierten Lösungsmittel 116 in einer Löseeinrichtung 120 mit einstellbaren relativen Mengen gelöst, wodurch die Lyocell-Spinnlösung 104 erhalten wird.. Die relativen Konzentrationsbereiche (auch als Spinnfenster bezeichnet) der Komponenten Ausgangsstoff 110, Wasser und Lösungsmittel 116 in der Spinnlösung 104 zur Herstellung von cellulosischen Regeneratformkörpern nach dem Lyocell-Verfahren können, wie einem Fachmann bekannt, geeignet eingestellt werden.

Die Lyocell-Spinnlösung 104 wird einer Fasererzeugungseinrichtung 124 zugeführt (die mit einer Anzahl von Spinnbalken oder Jets 122 ausgebildet sein kann).

Wenn die Lyocell-Spinnlösung 104 durch die Öffnungen 126 der Jets 122 geführt wird, wird sie in eine Mehrzahl von parallelen Fäden aus Lyocell-Spinnlösung 104 aufgeteilt. Die beschriebene Prozessführung transformiert die Lyocell-Spinnlösung 104 in zunehmend lange und dünne Fäden, deren Eigenschaften durch entsprechende Einstellung der Prozessbedingungen, gesteuert durch die Steuereinheit 140, eingestellt werden können. Optional kann ein Gasfluss die Lyocell-Spinnlösung 104 auf ihrem Weg von den Öffnungen 126 zu einer Faseraufnahmeeinheit 132 beschleunigen.

Nachdem die Lyocell-Spinnlösung 104 sich durch die Jets 122 und weiter abwärts bewegt hat, interagieren die langen und dünnen Fäden der Lyocell-Spinlösung 104 mit dem Koagulations-Fluid 106.

Bei der Wechselwirkung mit dem Koagulations-Fluid 106 (zum Beispiel Wasser) wird die Lösungsmittelkonzentration der Lyocell-Spinnlösung 104 reduziert, sodass die Cellulose des Ausgangsstoffs 110 zumindest teilweise als lange und dünne Cellulosefasern 108 (die immer noch Reste von Lösungsmittel und Wasser enthalten können) koaguliert bzw. ausfällt.

Während oder nach der initialen Bildung der individuellen Cellulosefasern 108 aus der extrudierten Lyocell-Spinnlösung 104 werden die Cellulosefasern 108 an der Faseraufnahmeeinheit 132 aufgenommen. Die Cellulosefasern 108 können in das in Figur 2 dargestellte Koagulations-Bad 191 (zum Beispiel ein Wasserbad, optional aufweisend ein Lösungsmittel wie NMMO) eintauchen und können bei Wechselwirkung mit der Flüssigkeit des Koagulations-Bads 191 ihr Ausfällen abschließen. Abhängig von der Prozesseinstellung der Koagulation kann die Cellulose Cellulosefasern 108 bilden (wie gezeigt, wobei die Cellulosefasern 108 einstoffig bzw. integral miteinander verschmolzen ("merging") sein können oder als getrennte Cellulosefasern 108 vorliegen können) oder kann sich an der Faseraufnahmeeinheit 132 eine Folie bzw. ein Film aus Cellulose bilden (nicht in Figur 2 dargestellt).

Die Cellulosefasern 108 werden also aus den Spinndüsen der Jets 122 extrudiert und durch das Spinnbad bzw. Koagulations-Bad 191 (enthaltend zum Beispiel Wasser und NMMO in niedriger Konzentration zur Ausfällung/Koagulation) geführt, dabei werden die Cellulosefasern 108 um eine jeweilige Umlenkrolle 193 im Koagulations-Bad 191 geführt und außerhalb des Koagulations-Bads 191 einer Abzugsgalette 195 zugeführt. Die Abzugsgalette 195 sorgt für Weitertransport und Nachverstreckung der Cellulosefasern 108, um einen gewünschten Titer zu erreichen. Nach der Abzugsgalette 195 wird das Faserbündel aus den Cellulosefasern 108 in einer Wascheinheit 180 gewaschen, gegebenenfalls aviviert und schließlich geschnitten (nicht gezeigt).

Obwohl dies in Figur 2 nicht dargestellt ist, kann Lösungsmittel 116 der Lyocell-Spinnlösung 104, das aus den Cellulosefasern 108 beim Koagulieren und bei einem nachfolgenden Waschen in der Wascheinheit 180 entfernt worden ist, zumindest teilweise zurückgewonnen bzw. recycelt werden und in einem nachfolgenden Zyklus wieder in den Speichertank 114 übergeführt werden.

Während des Transports entlang der Faseraufnahmeeinheit 132 kann der Formkörper 102 (hier in Form der Cellulosefasern 108) mittels der Wascheinheit 180 gewaschen werden, indem Letztere eine Waschflüssigkeit zum Entfernen von Lösungsmittelresten zuführt. Danach kann der Formkörper 102 getrocknet werden.

Der Formkörper 102 kann darüber hinaus einer Nachbehandlung unterzogen werden, siehe die schematisch dargestellte Nachbehandlungseinheit 134. Zum Beispiel kann eine solche Nachbehandlung eine Hydroverschlingung, eine Nadelbehandlung, eine Imprägnierung, eine Dampfbehandlung mit einem unter Druck zugeführten Dampf und/oder ein Kalandrieren, etc., aufweisen.

Die Faseraufnahmeeinheit 132 kann den Formkörper 102 einer Aufwickeleinrichtung 136 zuführen, an welcher der Formkörper 102 aufgewickelt werden kann. Der Formkörper 102 kann dann als Rollgut einer Entität zugeführt werden, die Produkte wie zum Beispiel Wischtücher oder Textilien auf Basis des Formkörpers 102 herstellt.

Um mittels der Apparatur 100 gemäß Figur 2 ein Verfahren gemäß einem exemplarischen Ausführungsbeispiel der Erfindung gemäß Figur 1 durchführen zu können, wird als Ausgangsstoff 110 ganz oder teilweise Material zugeführt, das aus einem vorangehenden Lyocell-Verfahren (ebenfalls durchführbar mit einer Apparatur 100 gemäß Figur 2) gewonnen wurde.

**Figur 3** zeigt eine mittels eines Lyocell-Verfahrens hergestellte Cellulosefaser 200 im Querschnitt. Die mittels eines Lyocell-Verfahrens hergestellte Cellulosefaser 200 hat eine glatte runde Außenfläche 202 und ist homogen und frei von makroskopischen Löchern mit Cellulosematerial ausgefüllt. Sie kann daher von einem Fachmann eindeutig von mittels eines Viskoseverfahrens hergestellten Cellulosefasern (siehe Bezugszeichen 204 in Figur 4) und von Cellulosefasern aus Baumwollpflanzen (siehe Bezugszeichen 206 in Figur 5) unterschieden werden.

**Figur 4** zeigt eine mittels eines Viskoseverfahrens hergestellte Cellulosefaser 204 im Querschnitt. Die Cellulosefaser 204 ist wolkenförmig und weist entlang ihres äußeren Umfangs eine Mehrzahl von bogenförmigen Strukturen 208 auf.

**Figur 5** zeigt eine natürliche Cellulosefaser 206 aus einer Baumwollpflanze im Querschnitt. Die Cellulosefaser 206 ist nierenförmig und weist im Inneren ein materialfreies Lumen 210 als vollumfänglich umschlossenen Hohlraum auf.

Anhand der signifikanten geometrischen bzw. strukturellen Unterschiede der Fasern gemäß Figur 3 bis Figur 5 ist es einem Fachmann möglich, zum Beispiel unter einem Mikroskop unzweideutig zu ermitteln, ob eine Cellulosefaser mittels des Lyocell-Verfahrens, mittels des Viskoseverfahrens oder natürlich in einer Baumwollpflanze gebildet worden ist.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Herstellen eines regenerierten cellulosischen Formkörpers (102), wobei das Verfahren aufweist:
Zuführen (78) eines Ausgangsstoffs (110), welcher Cellulose und nichtlösliche Partikel, insbesondere nichtlöslich in Lösungsmitteln, die in Lyocell-Verfahren und/oder Viskose-Verfahren verwendet werden, aufweist,
wobei der Ausgangsstoff (110) ein Festkörper ist, in welchem die nichtlöslichen Partikel verteilt vorliegen; und
Erzeugen (80) des regenerierten cellulosischen Formkörpers (102) basierend auf dem Ausgangsstoff (110) derart, dass der regenerierte cellulosische Formkörper (102) zumindest einen Teil der nichtlöslichen Partikel enthält.

2. Das Verfahren gemäß Anspruch 1,
wobei der Ausgangsstoff (110) Polymerfasern, insbesondere Cellulosefasern, aufweist, und
wobei die nichtlöslichen Partikel in den Polymerfasern des Ausgangsstoffs (110) inkorporiert sind.

3. Das Verfahren gemäß Anspruch 1 oder 2,
wobei das Erzeugen des regenerierten cellulosischen Formkörpers (102) ein Lyocell-Verfahren oder ein Viskose-Verfahren aufweist.

4. Das Verfahren gemäß einem der vorhergehenden Ansprüche,
wobei der Ausgangsstoff (110) ganz oder teilweise Reste aus einer Kleidungsherstellung und/oder Altkleider aufweist.

5. Das Verfahren gemäß einem der vorhergehenden Ansprüche,
wobei die nichtlöslichen Partikel anorganische Partikel, insbesondere Metalloxide, aufweisen oder aus diesen bestehen.

6. Das Verfahren gemäß Anspruch 5,
wobei die anorganischen Partikel zumindest eines aus der Gruppe aufweisen, welche aufweist Titandioxid, TiO₂, Aluminiumoxid, Al₂O₃, Magnesiumoxid, MgO, Siliciumoxid, SiO₂, Ceroxid, CeO₂, Magnesiumhydroxid, Mg(OH)₂, Aluminiumhydroxid, Al(OH)₃, Bariumsulfat, BaSO₄, Bornitrid, BN, und Zinkoxid, ZnO.

7. Das Verfahren gemäß einem der vorhergehenden Ansprüche,
wobei die nichtlöslichen Partikel synthetischen Kunststoff, insbesondere Polyester und/oder Elastan, aufweisen oder daraus bestehen.

8. Das Verfahren gemäß einem der vorhergehenden Ansprüche, wobei die nichtlöslichen Partikel zumindest eine der folgenden Eigenschaften aufweisen:
die Konzentration liegt in dem Ausgangsstoff in dem Bereich 0,05 % bis 3 %, insbesondere 0,25 % bis 1,5 %;
die Partikelgröße liegt unter 2,0 µm;
die nichtlöslichen Partikel liegen als ein dispergiertes Agglomerat von Molekülen vor, welche von einem Lösungsmittel, insbesondere von Wasser, umgeben sind.

9. Das Verfahren gemäß einem der vorhergehenden Ansprüche, ferner aufweisend:
Zuführen (64) von zumindest einem weiteren Ausgangsstoff, welcher Cellulose und nichtlösliche Partikel aufweist,
wobei der Anteil an nichtlöslichen Partikeln in dem Ausgangsstoff (110) und dem weiteren Ausgangsstoff verschieden ist; und
Erzeugen (80) des regenerierten cellulosischen Formkörpers (102) basierend auf dem Ausgangsstoff (110) und dem weiteren Ausgangsstoff derart, dass der regenerierte cellulosische Formkörper (102) einen vorbestimmten Anteil der nichtlöslichen Partikel enthält.

10. Das Verfahren gemäß einem der vorhergehenden Ansprüche, ferner aufweisend:
Auswaschen (74) von nichtlöslichen Partikeln aus dem regenerierten cellulosischen Formkörper (102) derart, dass der Anteil von nichtlöslichen Partikeln in dem regenerierten cellulosischen Formkörper (102) um zumindest 0,1%, insbesondere um zumindest 1%, reduziert wird.

11. Regenerierter cellulosischer Formkörper (102), welcher gemäß dem Verfahren nach einem der Ansprüche 1 bis 10 hergestellt ist,
wobei der regenerierte cellulosische Formkörper (102) ausgewählt ist aus der Gruppe, welche besteht aus Filament, Fasern, Folien, Mikrokugeln und Beads, wobei der regenerierte cellulosische Formkörper (102) einen Anteil von nichtlöslichen Partikel, insbesondere Titandioxid, in dem Bereich von 0,05 % bis 3 %, insbesondere 0,25 % bis 1,5 % aufweist; und
wobei der regenerierte cellulosische Formkörper (102) weiterhin zumindest eines der folgenden Merkmale aufweist:
der Anteil der nichtlöslichen Partikel in dem regenerierten cellulosischen Formkörper (102) weist mehr als 30 %, insbesondere mehr als 50 %, der nichtlöslichen Partikel des Ausgangsstoffs (110) auf;
das Arbeitsvermögen des regenerierten cellulosischen Formkörpers (102) beträgt im konditionierten Zustand zumindest 450 cN%/tex, wenn der regenerierte cellulosische Formkörper (102) mittels eines Lyocell-Verfahrens hergestellt ist;
das Arbeitsvermögen des regenerierten cellulosischen Formkörpers (102) beträgt im konditionierten Zustand zumindest 400 cN%/tex, wenn der regenerierte cellulosische Formkörper (102) mittels eines Viskose-Verfahrens hergestellt ist.

12. Spinnlösung (104) zum Verwenden in einem Lyocell-Verfahren und/oder einem Viskose-Verfahren, wobei die Spinnlösung (104) aufweist:
zumindest ein Lösungsmittel (116), insbesondere N-Methylmorpholin-N-oxid, NMMO;
eine Mehrzahl von Polymerfasern, insbesondere Cellulosefasern, welche in dem Lösungsmittel (116) zumindest teilweise gelöst sind; und
nicht-lösliche Partikel, insbesondere Titandioxid,
wobei die nicht-löslichen Partikel homogen verteilt in der Spinnlösung (104) vorliegen, insbesondere wobei die Spinnlösung (104) mehr als 0,01 Gewichtsprozent, weiter insbesondere mehr als 0,1 Gewichtsprozent, von den nichtlöslichen Partikel aufweist, bezogen auf ein Gesamtgewicht der Spinnlösung.
